# EUROPÄISCHE PATENTANMELDUNG

(11) **EP 0 815 717 A2**
(43) Veröffentlichungstag der Anmeldung: **07.01.1998**
(21) Anmeldenummer: 97108975.0
(22) Anmeldetag: 04.06.1997
(51) Int. Cl.: A01D 78/00

(54) **Heuwerbungsmaschine**

(30) Priorität: 05.06.1996 DE 29609870 U
(71) Anmelder: H. Niemeyer Söhne GmbH & Co. KG, 48477 Hörstel-Riesenbeck (DE)
(72) Erfinder: Ungruh, Josef, 48429 Rheine (DE); Müller, Fokke, Dipl.-Ing., 48477 Hörstel (DE); Niemeyer, Reinhard, Dr., 48477 Hörstel (DE); Kamphus, Ludger, 48496 Hopsten (DE)

(57) **Zusammenfassung**

Die Erfindung betrifft eine Heuwerbungsmaschine zum Schwaden von Halmgut mit mindestens zwei sich auf den Boden über Stützräder abstützenden Kreiselrechen mit radial ausgerichteten Zinkenträgern, die an ihren Enden Doppelfederzinken tragen, wobei die Kreiselrechen über einen Maschinenrahmen miteinander und durch eine Deichsel mit einem Traktor verbunden sind, der Anstellwinkel des Maschinenrahmens zur Fahrtrichtung veränderbar und feststellbar und ein Kreiselrechen in seiner Drehrichtung umkehrbar ist, wobei die Zinkenstellung aller Doppelfederzinken (14) des Kreiselrechens (10), dessen Drehrichtung (33) verändert wird, mit einer Verstellung eines Handhebels (28) in die neue, der Drehrichtung (35) angepaßten Arbeitsposition verstellbar ist.

## Beschreibung

Die Erfindung betrifft eine Heuwerbungsmaschine, zum Schwaden von Halmgut gemäß dem Oberbegriff des Anspruchs 1.

Aus der DE 42 06 504 A1 ist eine derartige Heuwerbungsmaschine zum Erzeugen von Schwaden zu Mittelschwaden, Einzelschwaden und Seitenschwaden bekannt. Wird die Maschine vom Arbeitsgang Mittel- oder Einzelschwad zum Seitenschwaden umgestellt, muß die Drehrichtung eines Kreiselrechens entgegengesetzt verlaufen, was in bekannter Weise durch die Umschaltung eines Zwischengetriebes erfolgt. Um die Zinken in die richtige Arbeitsposition zu bringen, sollen die Zinkenarme vom Kreiselrechen gelöst und spiegelbildlich wieder montiert oder der Kreiselrechen soll mit zwei verschiedenen Sätzen von einteiligen Zinkenarmen ausgerüstet werden. Die Umstellung des Kreiselrechens ist aufwendig und zeitraubend.

Aufgabe der Erfindung ist es, für eine Heuwerbungsmaschine zum Schwaden von Halmgut zu Mittelschwaden, Einzelschwaden oder Seitenschwaden die erforderliche Umstellung der Zinken bei geändeter Drehrichtung des Kreiselrechens mit einfachen Mitteln zu verbessern.

Die Erfindung löst die Aufgabe mit den im kennzeichnenden Teil des Anspruchs 1 genannten Merkmalen. Hinsichtlich weiterer wesentlicher Ausgestaltungen der Erfindung wird auf die Ansprüche 2 bis 15 verwiesen.

Nach der Erfindung ist es in einfacher und vorteilhafter Weise möglich, die Zinkenstellung aller Doppelfederzinken des Kreiselrechens, dessen Drehrichtung verändert wird, mit einer Verstellung in die neue Arbeitsposition zu bringen. Während der Arbeit des Kreiselrechens werden die Zinkenarme und damit die Doppelfederzinken in einer Kurvenbahn so gesteuert, daß sie die Recharbeit nur in einem Teil des Umfanges des Kreiselrechens ausführen und um dann durch Wegschwenken der Zinken die Bildung eines Schwades zu ermöglichen. Durch eine Feineinstellung kann die Kurvenbahn und damit der Schwenkbereich in Grenzen korrigiert werden, um sich den jeweiligen Einsatzbedingungen optimal anpassen zu können.

Die Erfindung sieht vor, daß die Zinkenarme nach der Steuerung durch eine Kurbel in der Kurvenbahn geteilt sind. Hier wird eine Führung für eine zweite Kurbel angeordnet, die sich mit der Kurbelbewegung in der Kurvenbahn bewegt und diese Bewegung auf eine zweite Kurbel überträgt, mit der die Zinkenarme schwenkbar verdrehfest verbunden sind.

An den Enden der Zinkenarme sind jeweils schraubenlinienförmig gewickelte Doppelfederzinken angeordnet, deren Schenke zueinander einen Winkel einschließen und die so gewickelt sind, daß ein Schenkel tangential auf der einen Seite der Wickelachse zum Boden gerichtet ist, während der zweite Schenkel tangential auf der anderen Seite der Wickelachse im Winkel zum ersten Schenkel zum Boden weist. Durch diese vorteilhafte Anordnung wird die Wirkung erzielt, daß für die eine Drehrichtung jeweils die Schenkel der nebeneinander angeordneten Doppelfederzinken im Einsatz sind, die in Drehrichtung vor der Wickelachse zum Boden gerichtet sind. Nach der Erfindung ist es auch möglich, daß die Doppelfederzinken aus zwei schraubenlinienförmig gewickelten Einzelzinken bestehen, die paarweise durch eine gemeinsame Halterung mit dem Zinkenträger verbunden sind. Die Ausbildung der Einzelzinken erlaubt es, diese durch eine um 180° gedrehte Anordnung zweimal pro Doppelzinken zu verwenden. Dies ist in der Herstellung kostengünstig und bei der Verwendung von Ersatzteilen billiger.

Die beiden Schenkel der auf dem Zinkenträger befestigten Doppelfederzinken stehen in einem Winkel zueinander und je nach Drehrichtung des Kreiselrechens werden die einen oder durch Verschwenken die anderen Schenkel in Arbeitsposition gebracht.

Die Winkelverstellung des Zinkenträgers erfolgt in einfacher Weise durch einen Handhebel, der in den beiden Stellungen arretierbar ist. Dabei werden sämtliche Zinkenträger mit ihrer Kurbel in den jeweiligen Führungen horizontal um die Drehachse des Kreiselrechens verschwenkt, so daß die zweite Kurbel in ihrer Endlage auf der anderen Seite der Schwenkachse der ersten Kurbel angeordnet ist. Durch diese Bewegung wird der zweite Schenkel der Doppelfederzinken in die Arbeitsposition gebracht, die der umgekehrten Drehrichtung entspricht. Die Verschwenkung ist außerordentlich einfach zu handhaben, was zu erheblicher Zeiteinsparung bei der Umstellung vom Mittel-, zum Einzelschwaden oder Seitenschwaden führt. Nach der Erfindung ist es auch möglich, den feststellbaren Hebel durch einen doppeltwirkenden hydraulischen Stellzylinder zu ersetzen. Das hätte zur Folge, daß sämtliche Verstellarbeiten vom Traktor aus durchgeführt werden können.

Weitere Merkmale und Vorteile der Erfindung ergeben sich aus der nachfolgenden Beschreibung und den Zeichnungen, in denen ein Ausführungsbeispiel für die Verstellung der Doppelfederzinken eines Kreiselrechens einer Heuwerbungsmaschine nach der Erfindung schematisch, angenähert maßstäblich dargestellt ist.

Es zeigt:
- Fig. 1 -: Einen zweikreiseligen Schwader in einer Draufsicht, schematisch dargestellt, in der Arbeitsposition Mittelschwad.
- Fig. 2 -: Einen zweikreiseligen Schwader, schematisch dargestellt, in der Arbeitsposition Einzelschwad.
- Fig. 3 -: Einen zweikreiseligen Schwader, schematisch dargestellt, in der Arbeitsposition Seitenschwaden.
- Fig. 4 -: Eine Teilansicht von unten gesehen eines Kreiselrechens mit Zinkenträger und Doppelfederzinken, sowie deren Steuerung.
- Fig. 5 -: Schematische Teilansicht in Richtung A gemäß Fg. 1.
- Fig. 6 -: Eine Teilansicht von unten gesehen eines Kreiselrechens mit Zinkenträger und Doppelfederzinken, sowie deren Steuerung bei umgekehrter Drehrichtung.
- Fig. 7 -: Schematische Teilansicht in Richtung B gemäß Fig. 2.
- Fig. 8 -: Schematische Teilansicht gemäß Schnitt C-D in Fig. 4.

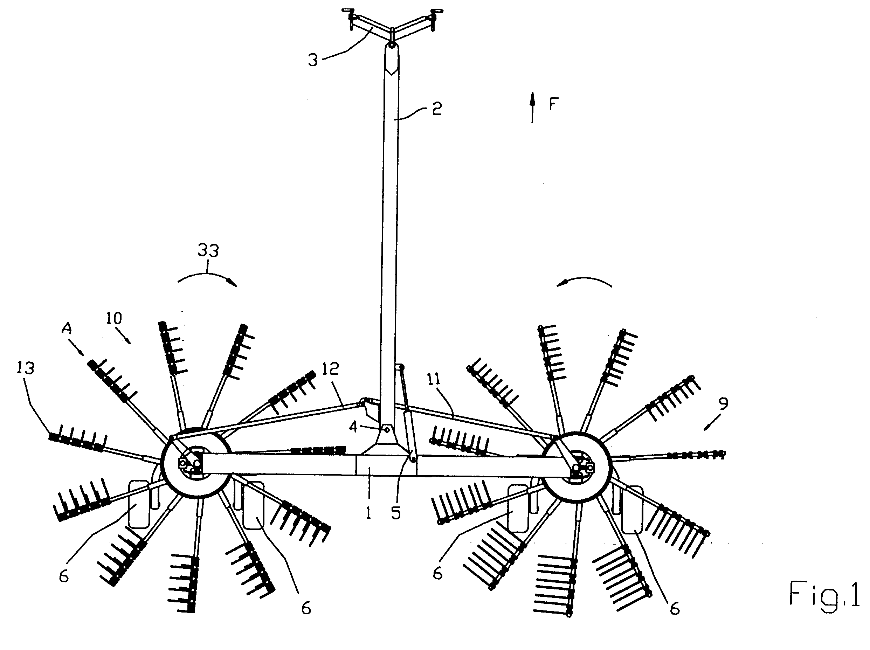

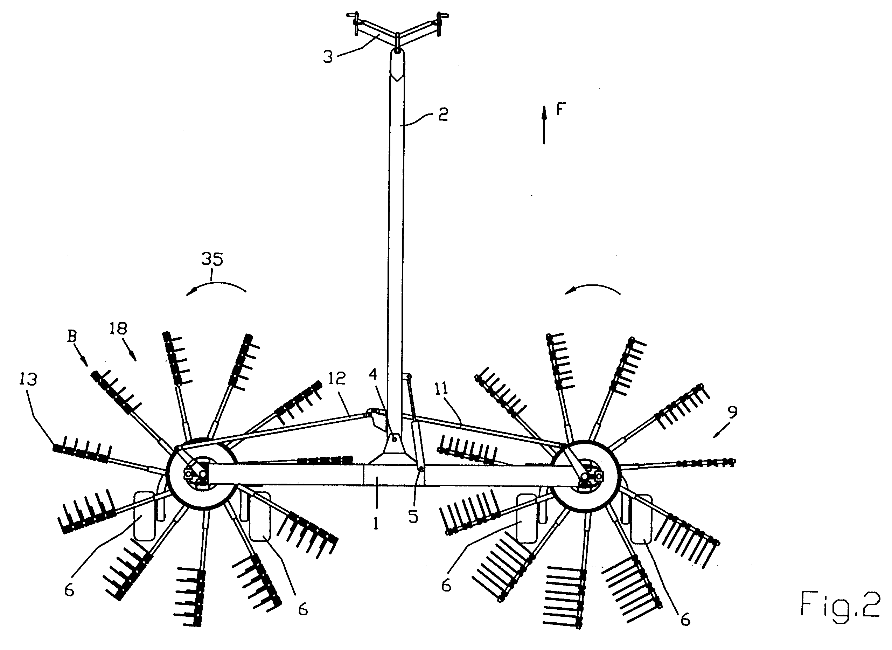

Als Ausführungsbeispiel einer Heuwerbungsmaschine zum Schwaden ist ein zweikreiseliger Schwader dargestellt, mit dem wahlweise die Arbeitsgänge Mittenschwad (Fig. 1), Einzelschwad (Fig. 2) oder Seitenschwad links durchgeführt werden können. Auf die Darstellung von für die Erfindung unwesentlichen Details ist verzichtet worden. Dies trifft insbesondere zu für den Antrieb der Kreisel von der Traktorzapfwelle aus, einschließlich dem erforderlichen Umkehr-Schaltgetriebe und den hydraulischen Verbindungen zum Traktor. Die Kreiselachsen (9,10,18) drehen in bekannter Weise jeweils um eine Kreiselachse (36).

Fig. 1 zeigt den Schwader in Arbeitsstellung zum Mittelschwaden. Der Schwader besteht im wesentlichen aus einem Maschinenrahmen (1) an dessen beiden äußeren Enden Kreiselrechen (9,10) angeordnet sind, die drehend angetrieben werden, wobei der Kreiselrechen (9) entgegen und der Kreiselrechen (10) im Uhrzeigersinn dreht. Der Maschinenrahmen (1) ist über eine Deichsel (2) mit einem Tragbock (3) gelenkig verbunden. Der Tragbock (3) stellt die Verbindung zum nicht dargestellten Hubgestänge des Traktors her. Die Deichsel (2) ist über eine vertikale Achse (4) mit dem Maschinenrahmen (1) schwenkbeweglich verbunden. Ein hydraulischer Stellzylinder (5) kann vom Traktor aus betätigt werden. Mit ihm kann die Winkelstellung des Maschinenrahmens (1) und damit der Kreiselrechen (9,10) zur Fahrtrichtung (F) bestimmt werden.

Die beiden Kreiselrechen (9,10) stützen sich über Stützräder (6) auf dem Boden ab und sind mit mehreren gesteuerten Zinkenträgern (13) ausgerüstet. Die Steuerung der Zinkenträger (13) erfolgt so, daß auf dem Umfang der Kreiselrechen (9,10) partiell Recharbeit geleistet wird und im übrigen Bereich die Zinken außer Eingriff sind, damit sich ein Mittenschwad bilden kann.

In Fig. 2 ist die Arbeitsstellung zum Erzeugen von Einzelschwaden dargestellt. Hier muß der Kreiselrechen (10) in seiner Drehrichtung (33) umgekehrt und die damit verbundenen Maßnahmen getroffen werden. Der Kreiselrechen (18) arbeitet nun entgegen der Drehrichtung (33), so daß jeder Kreiselrechen (9,18) einen eigenen Schwad bildet, der in Drehrichtung (35) neben dem Kreiselrechen (9,18) abgelegt wird.

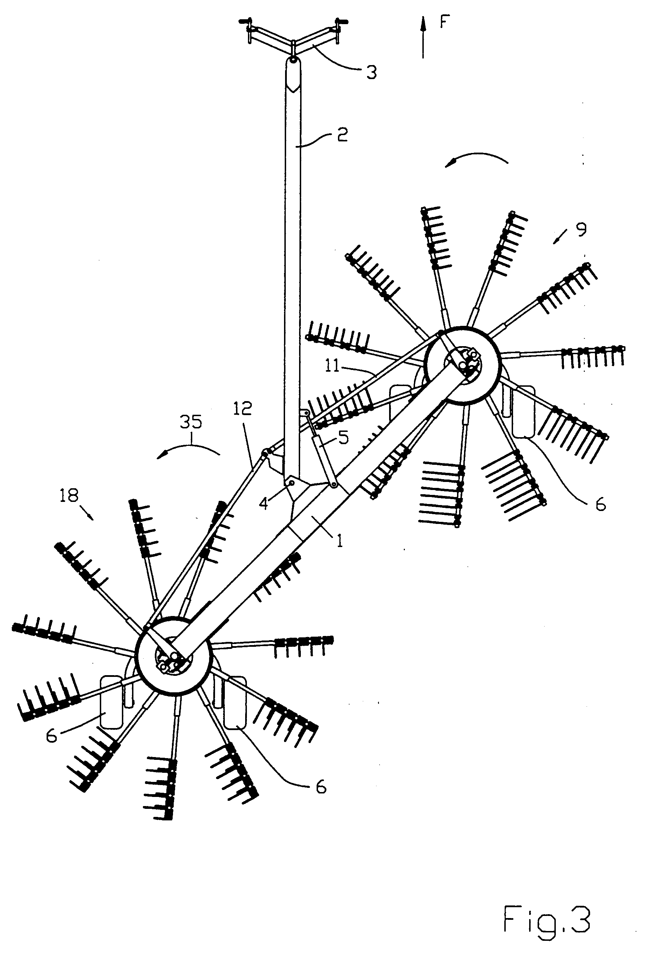

Die Fig. 3 zeigt die Arbeitsstellung Seitenschwaden links. Der Anstellwinkel des Maschinenrahmens (1) zur Fahrtrichtung (F) wird über den hydraulischen Stellzylinder (5) so verändert, daß der Kreiselrechen (9) beim Schwaden das Halmgut an den Kreiselrechen (18) übergibt, der dann einen gemeinsamen Schwad bildet. Mit der Verstellung des Maschinenrahmens (1) wird automatisch über die Stellstangen (11,12) die Neuausrichtung der Stützräder (6) und damit auch der Steuerung der Zinkenträger (13) durchgeführt.

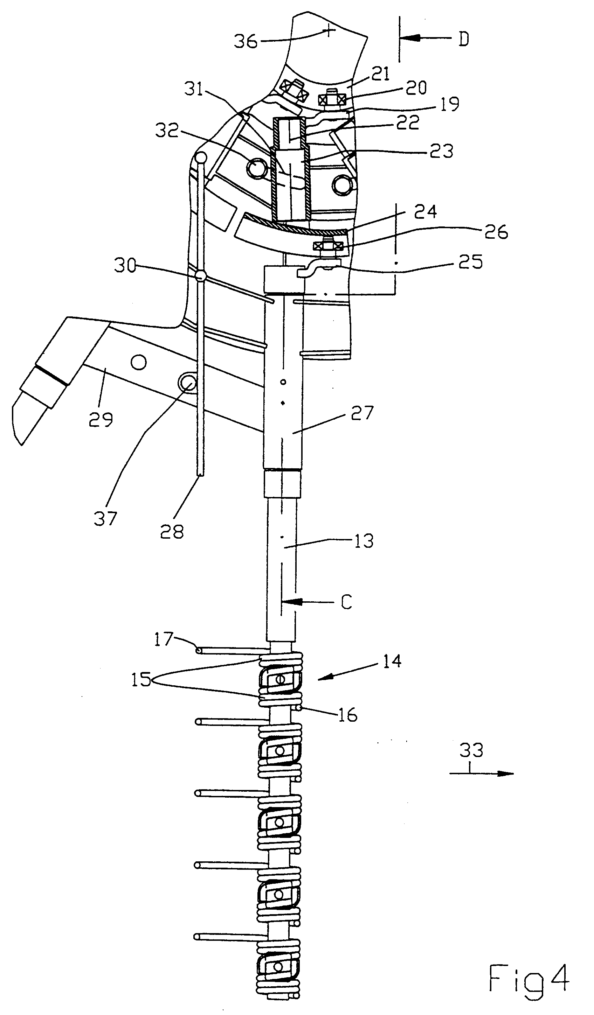

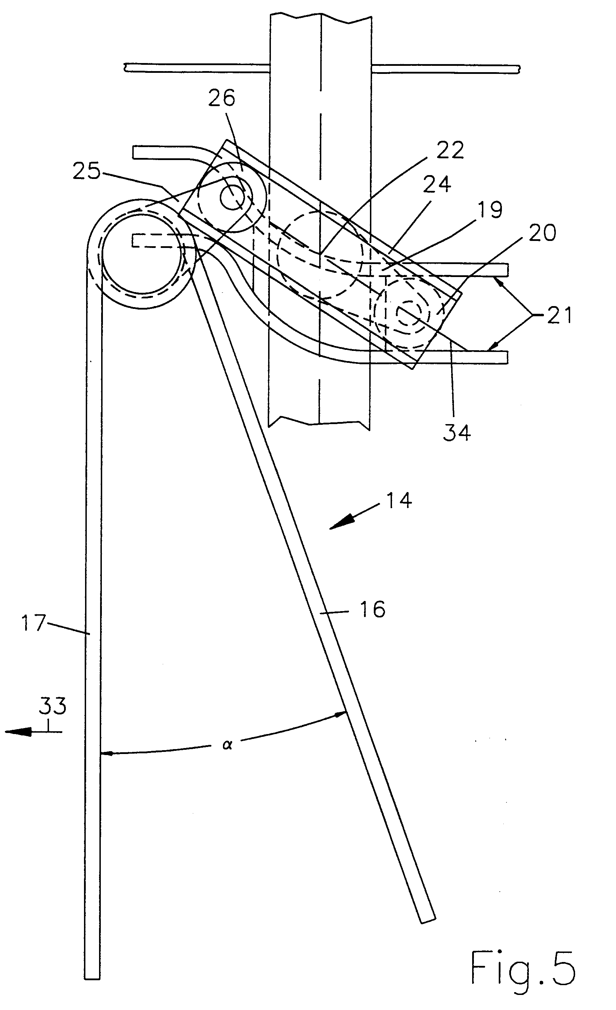

Fig. 4 zeigt eine Teilansicht von unten gesehen des Kreiselrechens (10) gemäß Fig. 1. Der Zinkenträger (13) ist an seinem äußeren Ende mit mehreren nebeneinander angeordneten Doppelfedersinken (14) bestückt, die lösbar mit Zinkenträger (13) verbunden sind. Die Doppelfedersinken (14) bestehen jeweils aus zwei Einzelzinken (15), die so gehaltert sind, daß ihre Schenkel (16,17) einen Winkel (α) (Fig. 5) einschließt. Je nach Drehrichtung des Kreiselrechens (10,18) werden durch Schwenken des Zinkenträgers (13) entweder die Schenkel (16) oder die Schenkel (17) der Doppelfederzinken (14) vertikal gestellt und damit in Arbeitsposition gebracht. Die Steuerung der Doppelfedersinken während der Arbeit geschieht in bekannter Weise durch eine Kurbel (19), deren Rolle (20) in einer Kurvenbahn (21) geführt wird. Die Kurbel (19) schwenkt um die Achse (22), deren Welle (23) mit der Führung (24) fest verbunden ist. In die Führung (24) greift eine Kurbel (25) mit ihrer Rolle (26) ein. Die Kurbel (25) ist mit dem Zinkenträger (13) fest verbunden und in einem Lagerteil (27) schwenkbar gelagert.

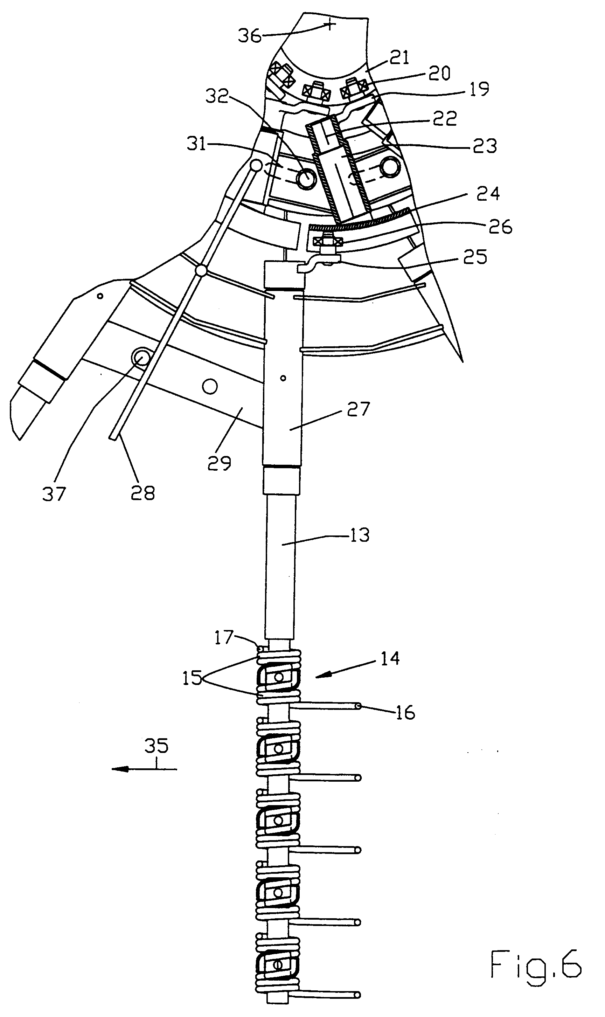

Die gemeinsame Verstellung aller Zinkenträger (13) mit den Doppelfederzinken (14) bei Umkehrung der Drehrichtung (33) des Kreiselrechens (10) in die Drehrichtung (35) des Kreiselrechens (18) erfolgt beispielsweise durch einen Handhebel (28), der durch Rasten (37) oder ähnliches mit der Verbindungsstrebe (29) verbindbar ist, die eine feste Verbindung zwischen den Lagerteilen (27) herstellt. Der Handhebel (28) schwenkt um den vertikalen Schwenkpunkt (30) und verstellt dabei die Lagerteile (27) mit den Zinkenträgern (13) und der Kurbel (25) in der Führung (24) so weit, daß die Schenkel (17) der Doppelfederzinken (14) in eine vertikale Arbeitsposition gelangen, die der neuen Drehrichtung (35) entspricht. Begrenzt wird diese Bewegung durch das Langloch (31), in dem sich eine Führung (32) bewegt. Das Langloch (31) mit der Führung (32) ist jedem Zinkenarm (13) zugeordnet. Die neue Arbeitsstellung der Doppelfederzinken (14) ist in Fig. 6 dargestellt.

Die gemeinsame Verstellung der Zinkenarme kann nach der Erfindung beispielsweise auch durch einen doppeltwirkenden hydraulischen Stellzylinder erfolgen, der vom Traktor aus betätigbar ist.

Fig. 5 zeigt eine schematische Teilansicht in Richtung A gemäß Fig. 1. Der in Drehrichtung (33) vertikal angeordnete Schenkel (17) des Doppelfederzinkens (14) bildet einen Winkel (α) mit dem außer Eingriff befindlichen Schenkel (16) des Doppelfederzinkens (14). Bei der Umstellung der Drehrichtung (33) des Kreiselrechens (10) in die Drehrichtung (35) des Kreiselrechens (18) müssen die Schenkel (16, 17) des Doppelfederzinkens (14) mindestens um den Winkel (α) geschwenkt werden, damit der jeweils in Arbeitsposition befindliche Schenkel (16,17) mindestens vertikal oder auch schleppend steht, um eine möglichst günstige Beanspruchung der federnden Windungen und eine gute Recharbeit zu erreichen.

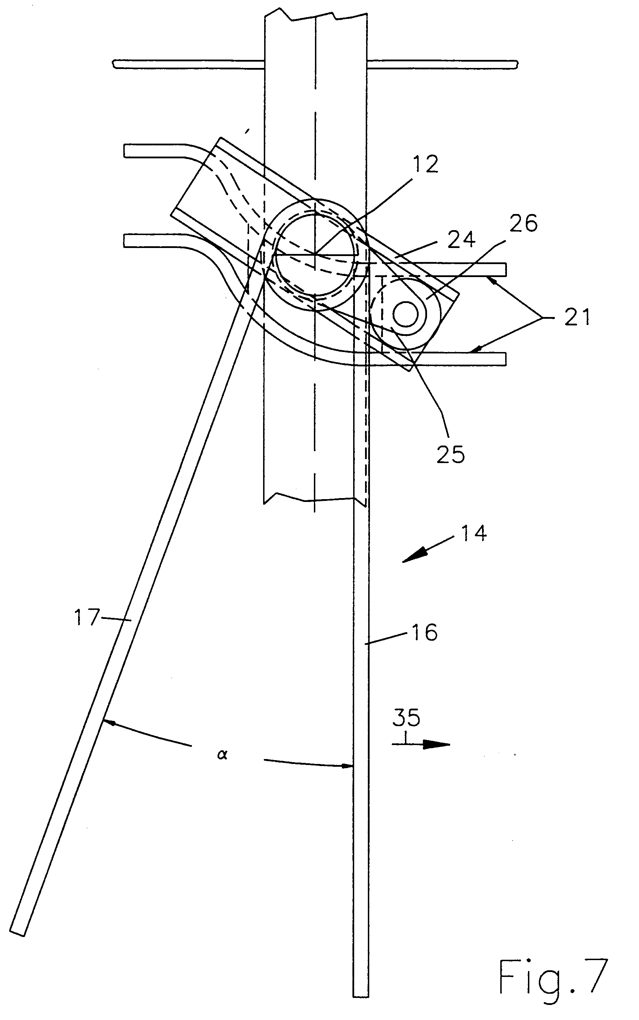

Die Mittelebene (34) der Kurbel (19) ist mit der Mittelebene der Führung (24) etwa parallel. Zur Verstellung der Doppelfederzinken (14) durch den Handhebel (28) wandert die Rolle (26) in der Führung (24) über die Achse (22) hinweg in ihre neue Endstellung, wie sie in Fig. 7 dargestellt ist. Dabei wird der Zinkenträger (13) soweit geschwenkt, daß die Schenkel (16) der Doppelfederzinken (14) in eine vertikale Arbeitsposition gelangen.

Fig. 6 stellt die analoge Endstellung für die geänderte Drehrichtung (35) dar.

In Fig. 7 ist in schematisch vereinfachter Darstellung eine Teilansicht in Richtung B gemäß Fig. 2 zu sehen. Hier steht die Rolle (26) der Kurbel (25) gegenüber Fig. 5 in der anderen Extremstellung und hat dadurch den Schenkel (16) des Doppelfederzinkens (14) in eine etwa vertikale Arbeitsposition gebracht. Die Kurbeln (19) und die Kurbel (25) mit den Rollen (20,26) sind in dieser Stellung hintereinander deckungsgleich. In dieser durch den Handhebel (28) fixierten Stellung arbeiten die Doppelfederzinken in bekannter Weise in der Kurvenbahn (21) gesteuert.

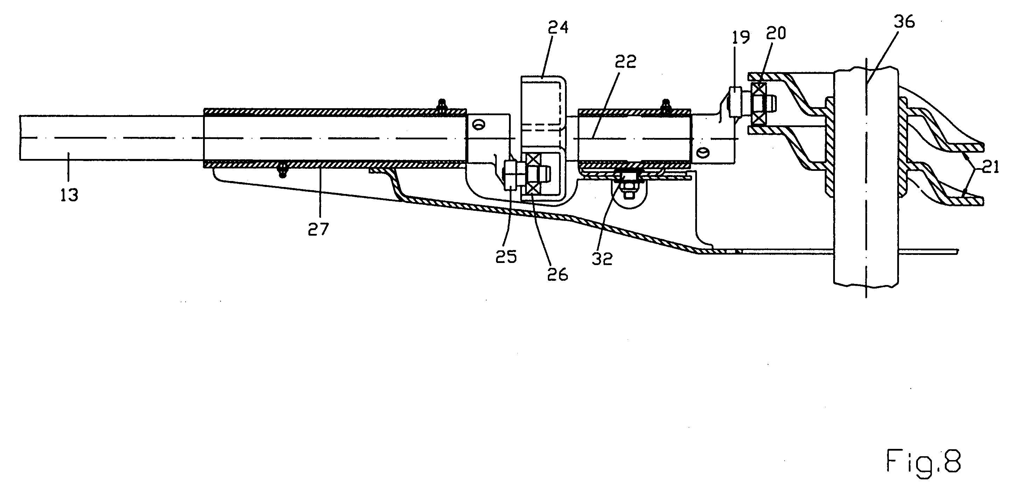

Fig. 8 zeigt einen Teilschnitt C-D gemäß Fig. 4. In dieser Ansicht wird die Zweiteilung der Steuerung des Zinkenträgers (13) im Bereich der Führung (24) deutlich.

## Patentansprüche

1. Heuwerbungsmaschine zum Schwaden von Halmgut mit mindestens zwei sich auf den Boden über Stützräder abstützenden Kreiselrechen mit radial ausgerichteten Zinkenträgern, die an ihren Enden Doppelfederzinken tragen, wobei die Kreiselrechen über einen Maschinenrahmen miteinander und durch eine Deichsel mit einem Traktor verbunden sind, der Anstellwinkel des Maschinenrahmens zur Fahrtrichtung veränderbar und feststellbar und ein Kreiselrechen in seiner Drehrichtung umkehrbar ist, dadurch gekennzeichnet, daß die Zinkenstellung aller Doppelfedersinken (14) des Kreiselrechens (10) dessen Drehrichtung (33) verändert wird, mit einer Verstellung eines Handhebels (28) in die neue, der Drehrichtung (35) angepaßten Arbeitsposition verstellbar ist.

2. Heuwerbungsmaschine nach Anspruch 1, dadurch gekennzeichnet, daß jeder Zinkenträger (13) der Kreiselrechen (10,18) nach der Steuerung in der Kurvenbahn (21) geteilt ist.

3. Heuwerbungsmaschine nach Anspruch 2, dadurch gekennzeichnet, daß in Ausrichtung zur Kurbel (19) dieser eine Führung (24) nachgeordnet ist, die sich mit der Kurbelbewegung in der Kurvenbahn (21) bewegt und diese Bewegung auf eine Kurbel (25) überträgt, mit der der Zinkenarm (13) schwenkbar verdrehfest verbunden ist.

4. Heuwerbungsmaschine nach Anspruch 3, dadurch gekennzeichnet, daß die Führung (24) zur Mittelebene (34) der Kurbel (19) im wesentlichen parallel ausgerichtet ist.

5. Heuwerbungsmaschine nach einem der Ansprüche 2 bis 4, dadurch gekennzeichnet, daß die Führung (24) zur Schwenkachse (22) der Kurbel (19) etwa mittig angeordnet ist.

6. Heuwerbungsmaschine nach einem der Ansprüche 2 bis 5, dadurch gekennzeichnet, daß jede Kurbel (19) um die Drehachse (36) des Kreiselrechens (10,18) zu jeder Kurbel (25) horizontal um einen Winkel verstell- und feststellbar ist.

7. Heuwerbungsmaschine nach Anspruch 6, dadurch gekennzeichnet, daß alle Kurbeln (25) gemeinsam verstellt werden.

8. Heuwerbungsmaschine nach den Ansprüchen 6 und 7, dadurch gekennzeichnet, daß die Verstellung mechanisch durch einen in Rasten (37) feststellbaren Handhebel (28) erfolgt.

9. Heuwerbungsmaschine nach den Ansprüchen 6 und 7, dadurch gekennzeichnet, daß die Verstellung durch einen hydraulischen Stellzylinder erfolgt.

10. Heuwerbungsmaschine nach einem der Ansprüche 1 bis 9, dadurch gekennzeichnet, daß die Schenkel (16,17) der schraubenlinienförmig gewickelten Doppelfederzinken (14) zur Wickelachse einen Winkel (α) einschließen.

11. Heuwerbungsmaschine nach Anspruch 10, dadurch gekennzeichnet, daß die mit den Zinkenträgern (13) verbundenen Doppelfederzinken (14) so gewickelt sind, daß ein Schenkel (16) tangential auf der einen Seite der Wickelachse zum Boden gerichtet ist, während der zweite Schenkel (17) tangential auf der anderen Seite der Wickelachse im Abstand im Winkel zum ersten Schenkel (16) zum Boden gerichtet ist.

12. Heuwerbungsmaschine nach den Ansprüchen 10 und 11, dadurch gekennzeichnet, daß die jeweiligen Doppelfederzinken (14) aus zwei schraubenlinienförmig gewickelten Einzelzinken (15) bestehen, die paarweise durch eine gemeinsame Halterung mit dem Zinkenträger (13) verbindbar sind.

13. Heuwerbungsmaschine nach Anspruch 12, dadurch gekennzeichnet, daß jeder Einzelzinken (15) so ausgebildet ist, daß er auch in 180° gedrehter Anordnung mit dem Zinkenträger (13) verbindbar ist.

14. Heuwerbungsmaschine nach einem der Ansprüche 1 bis 13, dadurch gekennzeichnet, daß mehrere wirksame Doppelfederzinken (14) nebeneinander auf jedem Zinkenträger (13) anbringbar sind.

15. Heuwerbungsmaschine nach einem der Ansprüche 1 bis 14, dadurch gekennzeichnet, daß bei Umkehrung der Drehrichtung (33,35) des Kreiselrechens (10,18) jeweils die in Drehrichtung (33,35) vorne befindlichen Schenkel (16,17) der Doppelfedersinken (14) in Arbeitsstellung geschwenkt werden.
